# EUROPÄISCHE PATENTSCHRIFT

(11) **EP 0 921 629 B1**
(45) Veröffentlichungstag und Bekanntmachung des Hinweises auf die Patenterteilung: **23.03.2005**
(21) Anmeldenummer: 98121465.3
(22) Anmeldetag: 11.11.1998
(51) Int. Cl.: H02P 5/178

(54) **Ansteuerschaltung für einen Universalmotor**
Control circuit for an universal motor
Circuit de contrôle pour un moteur universel

(30) Priorität: 25.11.1997 DE 19752098
(43) Veröffentlichungstag der Anmeldung: 09.06.1999
(73) Patentinhaber: Diehl AKO Stiftung & Co. KG, 88239 Wangen im Allgäu (DE)
(72) Erfinder: Weinmann, Martin Dipl.-Ing., 88339 Bad Waldsee (DE); Schotten, Henno Dipl.-Ing., 88260 Ratzenried (DE)
(74) Vertreter: Diehl Patentabteilung

(56) Entgegenhaltungen:
- EP-A- 0 581 557
- US-A- 4 035 704
- US-A- 4 370 603
- PATENT ABSTRACTS OF JAPAN vol. 013, no. 420 (M-872), 19. September 1989 & JP 01 157203 A (NISSAN MOTOR CO LTD), 20. Juni 1989

## Beschreibung

Die Erfindung betrifft eine Ansteuerschaltung für einen Universalmotor nach dem Oberbegriff des Patentanspruches 1.

Derartige Ansteuerschaltungen werden insbesondere bei Waschmaschinen oder Wäschetrocknern mit Universalmotoren verwendet.

Es ist bekannt, die Drehzahl von Universalmotoren in Waschmaschinen über eine Ansteuerelektronik mittels eines Stellglieds, beispielsweise Triacs, zu steuern und zu regeln. Für den Waschbetrieb wird an den Motor eine niedrige Spannung angelegt; für den Schleuderbetrieb wird die Motorspannung auf die volle Netzspannung hochgeregelt. Dabei sind Drehzahlspreizungen von etwa 1:30 erreichbar.

Sind größere Drehzahlspreizungen erwünscht, ist es bekannt, mit Feldschwächung im Universalmotor zu arbeiten. Hierbei ist ein Feldumschalter vorgesehen, mit dem eine Feldwicklung des Motors zum Einstellen eines Bereichs hoher Drehzahl von langem Feld auf kurzes Feld umschaltbar ist. Beispielsweise wird mit langem Feld bis auf eine Motordrehzahl von 8000 bis 10000 Umdrehungen pro Minute beschleunigt. Danach wird auf kurzes Feld umgeschaltet und auf die gewünschte hohe Schleuderenddrehzahl hochgeregelt. Dabei ist die Drehzahl, bei der die Feldumschaltung erfolgt, so festgelegt, daß sie auch bei ungünstigsten Betriebsbedingungen erreicht wird. Ungünstigste Betriebsbedingungen sind insbesondere das Vorliegen des niedrigsten möglichen Wertes der in einem Toleranzband schwankenden Netzspannung, das Vorliegen der höchsten zulässigen Unwucht in der Wäschetrommel und/oder das Vorliegen der ungünstigsten Riemenspannung zwischen dem Motor und der Wäschetrommel. Durch diese Festlegung der Drehzahl ergibt sich, daß im Normalfall, wenn die ungünstigsten Verhältnisse nicht vorliegen, die Umschaltung von langem Feld auf kurzes Feld bei einer Drehzahl erfolgt, die wesentlich niedriger ist als im Normalfall an sich nötig. Dies wirkt sich negativ auf die durch Bürstenverschleiß begrenzte Lebensdauer des Universalmotors aus. Denn im Betrieb mit kurzem Feld ist der Bürstenverschleiß größer ist beim Betrieb mit langem Feld, weil der über die Bürsten fließende Strom größer ist.

Durch die US-A-4,370,603 ist bereits eine Ansteuerschaltung bekannt, die für einen Universalmotor gemäß der US-A-4,035,704 einsetzbar ist und ein Stellglied zur Drehzahlregelung aufweist. Ferner geht aus der US-A-4,035,704 auch bereits ein Sensor zur Drehzahlerfassung sowie ein Feldumschalter hervor, mit dem eine Feldwicklung des Universalmotors zum Einstellen eines Bereiches hoher Drehzahl von langem Feld auf kurzes Feld umschaltbar ist. Außerdem ist gemäß US-A-4,370,603 ein Speicher zur Speicherung bestimmter Parameter eingesetzt worden. Femer ist es bekannt, daß die Ansteuerschaltung die Netzspannung überwacht.

In der DE 43 05 477 A1 ist in Figur 1 eine Ansteuerschaltung der eingangs genannten Art für einen Universalmotor gezeigt, der mit einer aus der Netzwechselspannung abgeleiteten Gleichspannung betrieben wird.

Ein Universalmotor mit Feldumschaltung ist auch in der DE 32 00 753 C2 beschrieben.

Ausgehend von dem vorgenannten Stand der Technik ist es Aufgabe der Erfindung, eine Ansteuerschaltung der eingangs genannten Art vorzuschlagen, bei der der Umschaltpunkt von langem Feld auf kurzes Feld von aktuellen Betriebsbedingungen abhängig ist, um die Standzeit der Bürsten des Universalmotors durch Verringerung des Bürstenverschleisses zu verbessern.

Auch in der EP 0581557 A1 ist offenbart, daß ein Feldumschalter die elektrische Spannung an eine ganze Feldwicklung oder aber auch nur an Teile der Feldwicklung anlegt, wodurch zwischen langem Feld und kurzem Feld umgeschaltet werden kann.

Erfindungsgemäß ist obige Aufgabe durch die Merkmale des Anspruches 1 gelöst. Vorteilhafte Weiterbildungen und Ausgestaltungen sind in den Unteransprüchen beschrieben.

Bei der Lösung nach Anspruch 1 überwacht die Ansteuerschaltung die jeweilige Höhe der vorliegenden Netzspannung. In einem Speicher ist eine Tabelle abgelegt, die für den gesamten möglichen Netzspannungsbereich von Netzunterspannung bis Netzüberspannung geeignete Umschaltpunkte für die Umschaltung von langem Feld auf kurzes Feld beinhaltet. Ist die aktuelle Netzspannung niedrig, dann erfolgt die Umschaltung von langem Feld auf kurzes Feld bei einer kleineren Drehzahl als bei höherer Netzspannung. Damit ist einerseits erreicht, daß auch bei niedriger Netzspannung die Feldumschaltung erfolgt und damit der Bereich der hohen Schleuderdrehzahl erreicht wird. Andererseits ist erreicht, daß bei hoher Netzspannung erst bei einer höheren Drehzahl, also später, von langem Feld auf kurzes Feld umgeschaltet wird. Dies verringert den Bürstenverschleiß, weil nicht unnötig lang mit kurzem Feld gearbeitet wird.

Bei der Lösung nach Anspruch 2 ist die Erfassung der Netzspannung nicht nötig. Die Umschaltung von langem Feld auf kurzes Feld erfolgt, wenn das Stellglied die volle Netzspannung an den Motor legt. Das Anliegen der vollen Netzspannung am Motor ist ein Zeichen dafür, daß die Drehzahl nicht weiter hochgeregelt werden kann, wenn nicht die Feldumschaltung (Feldschwächung) vorgenommen wird. Dabei wird die Feldschwächung gerade dann aktiviert, wenn der Motor aufgrund seiner aktuellen Belastung und der aktuell anliegenden Netzspannung den Sollwert der Drehzahl nicht erreichen kann, also der Drehzahlvorgabe des Sollwertes nicht mehr folgen kann. Der Betrieb mit kurzem Feld ist auf die minimal notwendige Zeit beschränkt, ohne daß eine gewünschte Drehzahl-Zeit-Kennlinie wesentlich negativ beeinflußt ist. Es ist also auch bei dieser Lösung die Bürstenstandzeit verbessert.

Nach dem Umschalten auf kurzes Feld beschleunigt sich bei zu hohen Drehmomenten infolge hohen Motorstroms der Bürstenverschleiß. Um dem entgegenzuwirken, erfaßt in Ausgestaltung der Erfindung die Ansteuerschaltung den Motorstrom nach der Feldumschaltung von langem Feld auf kurzes Feld direkt oder indirekt und vergleicht ihn mit einem gespeicherten Maximalwert. Bei Überschreiten des Maximalwerts schaltet die Ansteuerschaltung auf langes Feld zurück oder den Motor ab und startet ihn neu.

Weitere vorteilhafte Ausgestaltungen der Erfindung ergeben sich aus den Unteransprüchen und der folgenden Beschreibung. In der Zeichnung zeigen:
Figur 1 ein Blockschaltbild einer Ansteuerschaltung und
Figur 2 ein Drehzahldiagramm.

Ein Universalmotor 1 für eine Wäschetrommel einer Waschmaschine weist einen Anker 2, Bürsten 2' und eine Feldwicklung 3 auf, die mit einer Anzapfung 4 versehen ist. Zur Umschaltung von langem Feld auf kurzes Feld ist ein Feldumschalter 5 vorgesehen. Zur Umschaltung der Drehrichtung im Waschgang dient ein Drehrichtungsschalter 6.

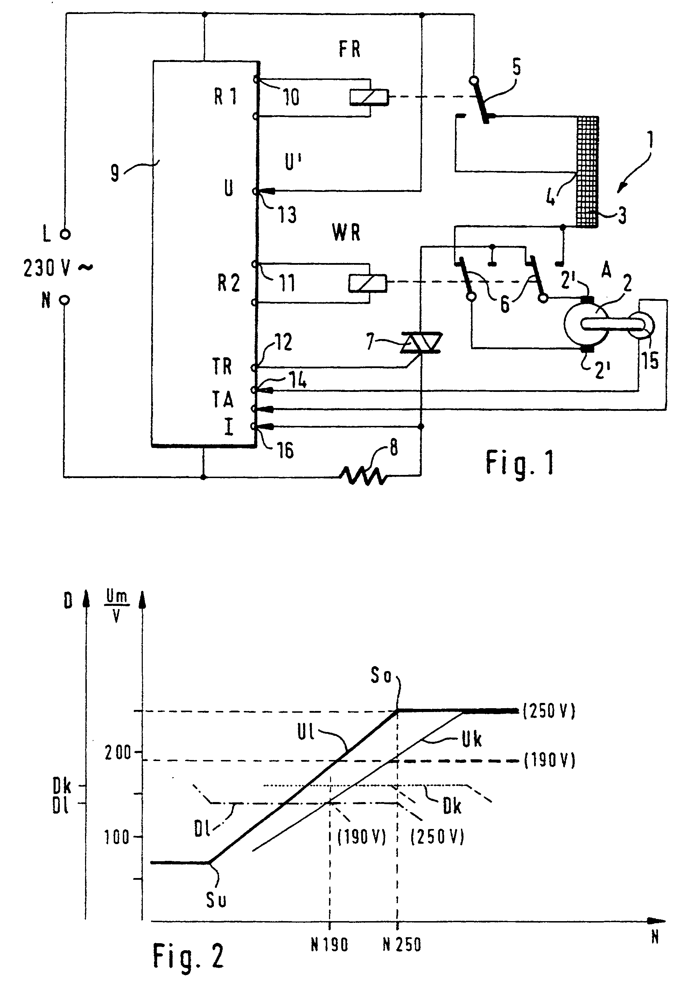

Der Universalmotor ist nach Figur 1 an das Wechselstromnetz L,N (230 V) angeschlossen. Er kann jedoch auch mit einem aus dem Wechselstromnetz abgeleiteten Gleichstrom betrieben werden (Chopperbetrieb).

Im Motorstromkreis liegt beispielsweise ein Triac 7 als Stellglied und ein Strommeßwiderstand 8.

Zur Steuerung bzw. Regelung der Drehzahl des Universalmotors 1 ist als Ansteuerschaltung ein Mikrocomputer 9 mit üblicher Peripherie vorgesehen. Der Mikrocomputer 9 weist analoge und digitale Eingänge und digitale Ausgänge auf. Ein Ausgang 10 dient der Steuerung des als Relais ausgebildeten Feldumschalters 5. Ein Ausgang 11 dient der Steuerung des als Relais ausgebildeten Drehrichtungsschalters 6. Ein Ausgang 12 dient der Ansteuerung des Triacs 7 zum Regeln der an den Motor 1 gelegten Spannung. Hierfür ist in den Mikrocomputer 9 ein Regler implementiert. Die auf den Triac 7 wirkende Stellgröße, mit der der Regler auf einen vom Mikrocomputer vorgegebenen Sollwert oder Sollwertverlauf reagiert, wird überwacht.

In einem Festwertspeicher (ROM) des Mikrocomputers 9 ist eine Tabelle abgelegt, in der den möglichen Netzspannungswerten im Toleranzband der Nennspannung (230 V) verschiedene Drehzahlwerte zugeordnet sind, bei deren am Eingang 14 gemessenen Auftreten der Feldumschalter 5 von langem Feld auf kurzes Feld umschaltet. Die Zuordnung ist derart gewählt, daß bei niedrigeren Netzspannungswerten die Feldumschaltung schon bei kleinerer Drehzahl erfolgt als bei höheren Netzspannungswerten. Die Zuordnung ist auch vom jeweiligen Motortyp abhängig. Es ist dadurch erreicht, daß die Umschaltung von langem Feld auf kurzes Feld beim Hochregeln der Motordrehzahl von Waschdrehzahl in Richtung auf Schleuderenddrehzahl nicht unnötig früh erfolgt, was den Verschleiß der Bürsten 2' reduziert.

Eine andere oder zusätzliche Möglichkeit der Bestimmung des Zeitpunkts der Feldumschaltung von langem Feld auf kurzes Feld beim Hochregeln der Motordrehzahl besteht in folgendem:

Der Mikrocomputer 9 erfaßt den Zeitpunkt, zu dem der in ihn implementierte Regler über den Triac 7 die volle Netzspannung an den Motor 1 legt. Nach einer gewissen Verzögerungszeit schaltet er dann den Feldumschalter 5 von langem Feld auf kurzes Feld. Die Feldschwächung erfolgt also gerade dann, wenn der Motor 1 aufgrund seiner aktuellen Belastung und der aktuellen gegebenen Netzspannung dem in Richtung Schleuderenddrehzahl gehenden Drehzahlsollwert nicht mehr folgen kann. Durch die Feldschwächung bleibt die gewünschte Drehzahl-Zeit-Kennlinie eingehalten. Da auch hier die Feldumschaltung nicht verfrüht erfolgt, ist der Bürstenverschleiß reduziert.

Sobald der Universalmotor 1 auf kurzes Feld umgeschaltet ist, besteht die Gefahr, daß sich bei zu hohem Drehmoment durch hohen Motorstrom der Bürstenverschleiß beschleunigt. Um dem entgegenwirken zu können, wird der Motorstrom direkt oder indirekt gemessen.

Die direkte Messung des Motorstroms erfolgt am Eingang 16 über die am Strommeßwiderstand 8 abfallende Spannung. Im Mikrocomputer 9 ist ein maximal zulässiger Motorstrom für Betrieb am kurzen Feld wertmäßig gespeichert. Der Mikrocomputer 9 vergleicht, ob der aktuelle Wert den gespeicherten Wert überschreitet. Der aktuelle Stromwert kann beispielsweise wegen eines Wasserringes in der Wäschetrommel, der durch ungenügendes Abpumpen wegen Schaumbildung entstehen kann, oder zu große Unwucht, oder mechanische Defekte zu groß werden. Übersteigt der tatsächliche Stromwert den zulässigen Maximalwert, dann schaltet der Mikrocomputer 9 den Feldumschalter 5 auf langes Feld zurück, wonach mit der damit erreichbaren, geringeren Drehzahl weitergeschleudert wird. Statt dessen wäre es auch möglich, den Motor 1 abzuschalten und ihn nach einer gewissen Beruhigungszeit erneut zu starten.

Der Motorstrom kann auch indirekt gemessen werden. Der Regler des Mikrocomputers 9 versucht auch beim Schleudern mit kurzem Feld, die Schleuderdrehzahl auf ihren Sollwert zu regeln. Es wird über den Eingang 13 die aktuelle Netzspannung erfaßt. Außerdem wird der durch die Regelung bei einer vorgegebenen Drehzahl eingestellte Phasenwinkel bezogen auf die Netzwechselspannung erfaßt, in dem der Triac 7 angesteuert wird. In einer in einem Festwertspeicher (ROM) abgelegten Tabelle ist das für den Motor zusätzliche bzw. zu hohe Drehmoment abgelegt. Durch Vergleich mit den genannten Daten mit diesem kann die Entscheidung getroffen werden, ob der Motorstrom bzw. das Drehmoment unzulässig hoch ist. Zweckmäßig wird für diese Entscheidung die Drehzahl bei kurzem Feld kurzzeitig auf die Drehzahl der Feldumschaltung geregelt. Ergibt sich ein zu hoher Motorstrom bzw. zu hohes Drehmoment, dann wird auf langes Feld zurückgeschaltet, oder der Motor gestoppt und erneut gestartet.

Anstelle des Phasenwinkels der Phasenanschnittsteuerung kann für diese indirekte Erfassung des Motorstroms bei einer anderen Art der Steuerung des Triacs 7 oder eines anderen Stellgliedes das zeitliche Ein-Ausschaltverhältnis herangezogen werden. Eine solche Ansteuerung liegt beispielsweise beim Chopperbetrieb vor, bei dem der Universalmotors 1 mit einer Gleichspannung gespeist wird. Die mittlere Motorspannung ergibt sich dann aus dem Einschaltverhältnis des Stellgliedes.

Beim Gleichstrombetrieb des Motors können wesentlich höhere Ströme fließen als beim Wechselstrombetrieb. Das Stromwendesystem reagiert beim Gleichstrombetrieb wesentlich empfindlicher auf Überströme (DC-Effekt). Aus diesen Gründen ist es beim Gleichstrombetrieb wichtig, den Motor über den gesamten Drehzahlbereich auch vor kurzzeitigen Stromspitzen zu schützen.

Für die Strombegrenzung reicht die ohnehin erfaßte Reglereingangsgröße (Istdrehzahl) aus. Für jede Motordrehzahl ist im Speicher des Mikrocontrollers die maximal zulässige Stellgröße und daraus folgend die maximale Motorspannung hinterlegt. Der Motorstrom stellt sich dann gemäß dem Arbeitspunkt ein, der durch die Stellgröße für die Motorspannung, die aktuelle Netzspannung und die Drehzahl bestimmt ist.

Wird zusätzlich zur Istdrehzahl noch die aktuell vorliegende Netzspannung erfaßt und die Regelung dahin erweitert, daß der Mikrocontroller die Stellgröße auch der aktuell vorliegenden Netzspannung anpaßt und damit über die tatsächlich anliegende Motorspannung verfügt, dann erfolgt die Motorregelung und die drehzahlabhängige Begrenzung der maximal zulässigen Motorspannung unabhängig von Netzspannungsschwankungen, d.h. die maximale Motorspannung ist drehzahlabhängig exakt begrenzt und nicht von Schwankungen der Versorgungsspannung beeinflußt. Damit ist der Motorstrom indirekt gemäß der vorgegebenen Motorspannung begrenzt. Der Motorstrom kann auch durch eine direkte Messung des Motorstroms drehzahlabhängig begrenzt werden.

Die drehzahlabhängige Begrenzung des Motorstroms ist besonders deshalb wichtig, weil für das Stromwendesystem des Universalmotors hohe Ströme bei hoher Drehzahl eine besondere Belastung darstellen. Hohe Ströme treten bei hohen Drehmomenten auf. Bei einer Waschmaschine treten hohe Drehmomente beim Anlauf sowie bei den langsamen Waschdrehzahlen auf, solange sich ein hohes Wasserniveau in der Wäschetrommel befindet. Beim Schleudern, bei dem die Wäsche entwässert und das Wasser laufend abgepumpt wird, ist das benötigte Drehmoment und damit der Motorstrom um ca. den Faktor 2 kleiner als beim Waschen. Außerdem kann bei zunehmender Schleuderdrehzahl von einem konstanten bzw. mit der Drehzahl leicht abnehmenden Drehmomentbedarf ausgegangen werden.

Entsprechend den oben beschriebenen Drehmomentanforderungen läßt sich bei der beschriebenen Einrichtung die drehzahlabhängige Spannungsbegrenzung einfach implementieren. Gemäß Figur 2 werden für den Betrieb mit langem Feld zwei Motorspannungs/Drehzahl-Stützpunkte entsprechend vom System geforderten Drehmoment definiert. In Figur 2 sind über der Drehzahl N Kennlinien dargestellt für:
die maximale Motorspannung UL bei langem Feld und hoher Netzspannung (250 V) sowie (strichliert) bei niedriger Netzspannung (190 V),
die maximale Motorspannung Uk bei kurzem Feld,
das maximale Motordrehmoment DL bei langem Feld und
das maximale Motordrehmoment DK bei kurzem Feld.

Der Spannungswert des unteren Stützpunktes Su entspricht der maximalen Spannung für den Anlauf des Motors. Der Drehzahlwert des unteren Stützpunktes Su entspricht einem für den Schleuderhochlauf in diesem Arbeitspunkt genügenden Drehmoment.

Der Spannungswert für den oberen Stützpunkt So entspricht der maximalen Netzspannung oder zumindest der Nennspannung des Motors. Der Drehzahlwert für den oberen Stützpunkt So entspricht der Drehzahl, bei der bei zugehörig definierter Spannung das Motordrehmoment kleiner oder gleich dem Drehmoment beim unteren Stützpunkt Su ist.

Bei Drehzahlen unterhalb des unteren Stützpunktes Su ist die maximale Motorspannung entsprechend des dort definierten Wertes konstant (vgl. Fig.2).

Zwischen beiden Stützpunkten Su und So berechnet sich die maximale Motorspannung entsprechend einer linearen Interpolation zwischen beiden Stützpunkten. Damit ergibt sich ein konstantes maximales DrehmomentDL/DK während des Schleuderhochlaufes, falls beide Stützpunkte für gleiches Drehmoment konfiguriert wurden.

Bei Drehzahlen oberhalb des oberen Stützpunktes So entspricht die Motorspannung der aktuell anliegenden Netzspannung oder wird auf Nennspannung geregelt.

Für den Betrieb mit kurzem Feld kann das Motorspannungs/Drehzahlprofil entsprechend wie für den Betrieb mit langem Feld ermittelt werden, wobei die zusätzliche Randbedingung herrscht, daß das daraus resultierende Drehmoment zumindest in dem Drehzahlbereich, in dem eine Feldumschaltung stattfinden kann, mindestens gleich oder größer ist als bei langem Feld, um zu verhindern, daß die Drehzahl nach der Feldumschaltung abfällt bzw. abkippt.

Die Feldumschaltung wird erst dann aktiviert, wenn am langen Feld - entsprechend der oben beschriebenen, drehzahlabhängigen Spannungsbegrenzung für den Motor - die volle Netzspannung oder die Nennspannung am Motor anliegt.

Falls der Motor bei kurzem Feld an Drehzahl verliert, weil es zu einer fehlerhaften Erhöhung des Drehmoments bei hohen Drehzahlen, beispielsweise durch die Bildung eines Wasserrings in der Wäschetrommel kommt, wird auf langes Feld umgeschaltet, was mit einer gewissen Drehzahlhysterese, von beispielsweise 2000 Motorumdrehungen geschieht.

## Patentansprüche

1. Ansteuerschaltung (9) für einen Universalmotor (1) mit einem Stellglied (7) zur Drehzahlregelung, einer Überwachung der Netzspannung, einem Sensor (14) zur Drehzahlerfassung und mit einem Feldumschalter(5), mit dem eine Feldwicklung (3) des Motors (1) zum Einstellen eines Bereichs hoher Drehzahl von langem Feld auf kurzes Feld umschaltbar ist, indem anstatt an die gesamte Feldwicklung (3) nur an einen Teil der Feldwicklung (3) elektrische Spannung angelegt wird, und mit einem Speicher (ROM) zur Speicherung von bestimmten Parametern,
**dadurch gekennzeichnet,**
**daß** in dem Speicher (ROM) eine Netzspannungs-Umschaltdrehzahl-Tabelle abgelegt ist, und daß die Ansteuerschaltung (9) die Umschaltung von langem Feld auf kurzes Feld beim Vorliegen einer niedrigeren Netzspannung bei einer kleineren Drehzahl als beim Vorliegen einer höheren Netzspannung durchführt.

2. Ansteuerschaltung nach Anspruch 1,
**dadurch gekennzeichnet,**
**daß** die Ansteuerschaltung (9) die Umschaltung von langem Feld auf kurzes Feld durchführt, wenn das Stellglied(7) die volle Netzspannung oder mindestens die Motornennspannung an den Motor (1) legt.

3. Ansteuerschaltung nach Anspruch 1,
**dadurch gekennzeichnet,**
**daß** die Umschaltung erfolgt, wenn die volle Netzspannung eine gewisse Zeit an den Motor (1) angelegt ist.

4. Ansteuerschaltung nach einem der vorhergehenden Ansprüche,
**dadurch gekennzeichnet,**
**daß** die Ansteuerschaltung(9) den Motorstrom nach der Feldumschaltung von langem Feld auf kurzes Feld direkt oder indirekt erfaßt und mit einem gespeicherten Maximalwert vergleicht und daß die Ansteuerschaltung (9) beim Überschreiten des Maximalwerts auf langes Feld zurückschaltet oder den Motor (1) abschaltet und erneut startet.

5. Ansteuerschaltung nach Anspruch 4,
**dadurch gekennzeichnet,**
**daß** der Motorstrom direkt über die an einem Strommeßwiderstand (8) abfallende Spannung erfaßt wird.

6. Ansteuerschaltung nach Anspruch 4,
**dadurch gekennzeichnet,**
**daß** der Motorstrom indirekt aus Regeldaten eines in die Ansteuerschaltung (9) implementierten Drehzahlreglers und der Istspannung des Netzes oder der Istdrehzahl ermittelt wird.

7. Ansteuerschaltung nach einem der vorhergehenden Ansprüche,
**dadurch gekennzeichnet,**
**daß** der Motorstrom jeweils für langes Feld und kurzes Feld drehzahlabhängig begrenzt wird und das daraus resultierende Drehmoment für das kurze Feld mindestens in dem Drehzahlbereich, in dem eine Feldumschaltung stattfinden kann, gleich oder geringfügig größer ist als das für das lange Feld.

8. Ansteuerschaltung nach Anspruch 7,
**dadurch gekennzeichnet,**
**daß** die Umschaltung von langem Feld auf kurzes Feld stattfindet, wenn am langen Feld die volle Netzspannung oder die Motornennspannung anliegt.

9. Ansteuerschaltung nach Anspruch 7 oder 8,
**dadurch gekennzeichnet,**
**daß** die Motorstrombegrenzung über eine drehzahlabhängige Begrenzung der maximalen Stellgröße für das die Motorspannung schaltende Stellglied erfolgt.

10. Ansteuerschaltung nach Anspruch 9,
**dadurch gekennzeichnet,**
**daß** die aktuelle Netzspannung gemessen wird, und die maximale Stellgröße für das die Motorspannung schaltende Stellglied zusätzlich netzspannungsabhängig korrigiert wird, womit die Motorspannung drehzahlabhängig ohne Einfluß von Netzspannungsschwankungen begrenzt wird.

11. Ansteuerschaltung nach einem der vorhergehenden Ansprüche,
**dadurch gekennzeichnet,**
**daß** mit einer Drezahlhysterese von kurzem Feld auf langes Feld zurückgeschaltet wird, wenn das Drehmoment beim Betrieb mit kurzem Feld stark ansteigt und die Drehzahl absinkt.

12. Ansteuerschaltung nach einem der vorhergehenden Ansprüche,
**dadurch gekennzeichnet,**
**daß** eine Mindestdrehzahl definiert wird, deren Erreichen Voraussetzung für eine Feldumschaltung ist.

## Claims

1. Drive circuit (9) for a universal motor (1) having an actuating element (7) for rotation speed control, having mains voltage monitoring, having a sensor (14) for rotation speed detection and having a field changeover switch (5), by means of which a field winding (3) of the motor (1) can be switched from a long field to a short field in order to select a high rotation speed range by applying electrical voltage to only a part of the field winding (3) rather than to the entire field winding (3), and having a memory (ROM) for storage of specific parameters,
**characterized**
**in that** a mains voltage switching rotation speed table is stored in the memory (ROM) and in that the drive circuit (9) switches from the long field to the short field in the presence of a lower mains voltage at a lower rotation speed than in the presence of a higher mains voltage.

2. Drive circuit according to Claim 1,
**characterized**
**in that** the drive circuit (9) switches from the long field to the short field when the actuating element (7) applies the full mains voltage or at least the motor rated voltage to the motor (1).

3. Drive circuit according to Claim 1,
**characterized**
**in that** the switching takes place when the full mains voltage has been applied to the motor (1) for a specific time.

4. Drive circuit according to one of the preceding claims,
**characterized**
**in that** the drive circuit (9) detects the motor current after field switching from the long field to the short field directly or indirectly, and compares with a stored maximum value, and in that the drive circuit (9) switches back to the long field or switches the motor (1) off and starts it again when the maximum value is exceeded.

5. Drive circuit according to Claim 4,
**characterized**
**in that** the motor current is detected directly from the voltage which is dropped across a current measurement resistor (8).

6. Drive circuit according to Claim 4,
**characterized**
**in that** the motor current is determined indirectly from control data for a rotation speed regulator which is implemented in the drive circuit (9), and from the actual mains voltage or the actual rotation speed.

7. Drive circuit according to one of the preceding claims,
**characterized**
**in that** the motor current is in each case limited for the long field and for the short field as a function of the rotation speed, and the torque which results from this for the short field is equal to or slightly greater than that for the long field, at least in the rotation speed range in which field switching can take place.

8. Drive circuit according to Claim 7,
**characterized**
**in that** the switching from the long field to the short field takes place when the full mains voltage or the motor rated voltage is applied to the long field.

9. Drive circuit according to Claim 7 or 8,
**characterized**
**in that** the motor current is limited by limiting the maximum manipulated variable, which is a function of the rotation speed, for the actuating element which switches the motor voltage.

10. Drive circuit according to Claim 9,
**characterized**
**in that** the instantaneous mains voltage is measured, and the maximum manipulated variable for the actuating element which switches the motor voltage is additionally corrected as a function of the mains voltage, so that the motor voltage is limited as a function of the rotation speed without any influence from mains voltage fluctuations.

11. Drive circuit according to one of the preceding claims,
**characterized**
**in that** switching back from the short field to the long field takes place with rotation speed hysteresis, when the torque rises sharply and the rotation speed falls during operation with the short field.

12. Drive circuit according to one of the preceding claims,
**characterized**
**in that** a minimum rotation speed is defined, with the reaching of this minimum rotation speed being a precondition for field switching.

## Revendications

1. Circuit de contrôle (9) pour un moteur universel (1) comprenant un élément de commande (7) pour la régulation de la vitesse de rotation, un dispositif de surveillance de la tension du réseau, un capteur (14) pour détecter la vitesse de rotation et comprenant un permutateur de champ (5) avec lequel un enroulement de champ (3) du moteur (1) peut être commuté de champ long en champ court pour régler une plage de vitesses de rotation élevée en appliquant une tension à une partie seulement de l'enroulement de champ (3) plutôt qu'à la totalité de l'enroulement de champ (3), et comprenant une mémoire (ROM) pour enregistrer certains paramètres, **caractérisé en ce que** dans la mémoire (ROM) est enregistré un tableau tension du réseau / vitesse de rotation de permutation et que le circuit de contrôle (9) effectue la permutation du champ long au champ court en présence d'une tension de réseau faible avec une vitesse de rotation inférieure à celle obtenue en présence d'une tension de réseau plus élevée.

2. Circuit de contrôle selon la revendication 1, **caractérisé en ce que** le circuit de contrôle (9) effectue la permutation du champ long au champ court lorsque l'élément de commande (7) applique au moteur (1) la pleine tension du réseau ou au moins la tension nominale du moteur.

3. Circuit de contrôle selon la revendication 1, **caractérisé en ce que** la permutation a lieu lorsque la pleine tension du réseau est appliquée au moteur (1) pendant un certain temps.

4. Circuit de contrôle selon l'une des revendications précédentes, **caractérisé en ce que** le circuit de contrôle (9) détecte directement ou indirectement le courant du moteur après la permutation de champ de champ long en champ court et le compare avec une valeur maximale enregistrée et que le circuit de contrôle (9), en cas de dépassement de la valeur maximale, rebascule sur le champ long ou arrête puis redémarre le moteur (1).

5. Circuit de contrôle selon la revendication 4, **caractérisé en ce que** le courant du moteur est détecté directement par le biais de la chute de tension aux bornes d'un shunt (8).

6. Circuit de contrôle selon la revendication 4, **caractérisé en ce que** le courant du moteur est déterminé indirectement à partir des paramètres de régulation d'un régulateur tachymétrique mis en oeuvre dans le circuit de contrôle (9) et la tension réelle du réseau et la vitesse de rotation réelle est déterminée.

7. Circuit de contrôle selon l'une des revendications précédentes, **caractérisé en ce que** le courant du moteur est à chaque fois limité en fonction de la vitesse de rotation pour le champ long et le champ court et le couple qui en résulte pour le champ court est égal ou légèrement supérieur à celui du champ long et est au moins dans la plage de vitesses de rotation dans laquelle il peut se produire une permutation de champ.

8. Circuit de contrôle selon la revendication 7, **caractérisé en ce que** la permutation de champ long en champ court s'effectue lorsque la pleine tension du réseau ou la tension nominale du moteur est appliquée au champ long.

9. Circuit de contrôle selon la revendication 7 ou 8, **caractérisé en ce que** la limitation du courant du moteur s'effectue par le biais d'une limitation en fonction de la vitesse de rotation de la grandeur de commande maximale pour l'élément de commande qui commute la tension du moteur.

10. Circuit de contrôle selon la revendication 9, **caractérisé en ce que** la tension actuelle du réseau est mesurée et la grandeur de commande maximale pour l'élément de commande qui commute la tension du moteur est en plus corrigée en fonction de la tension du réseau, ce qui permet de limiter la tension du moteur en fonction de la vitesse de rotation sans influence des variations de la tension du réseau.

11. Circuit de contrôle selon l'une des revendications précédentes, **caractérisé en ce que** le retour du champ court au champ long s'effectue avec une hystérésis de la vitesse de rotation lorsque le couple augmente fortement et la vitesse de rotation diminue lors d'un fonctionnement sur champ court.

12. Circuit de contrôle selon l'une des revendications précédentes, **caractérisé en ce qu'**une vitesse de rotation minimale est définie, laquelle doit être atteinte pour qu'une permutation de champ ait lieu.
